(19) Europäisches Patentamt
European Patent Office
Office européen des brevets

(11) EP 0 686 866 B1

(12) **EUROPEAN PATENT SPECIFICATION**

(45) Date of publication and mention
of the grant of the patent:
**12.05.1999 Bulletin 1999/19**

(51) Int Cl.⁶: **G02F 1/015**, G02F 1/35

(21) Application number: **95111439.6**

(22) Date of filing: **08.09.1989**

(54) **Semiconductor optical device having a non-linear operational characteristic**

Optische Halbleitervorrichtung mit nichtlinearer Betriebscharakteristik

Dispositif optique à semi-conducteur ayant des caractéristiques opérationelles non linéaires

(84) Designated Contracting States:
**DE**

(30) Priority: **09.09.1988 JP 224547/88**
          **19.05.1989 JP 126239/89**

(43) Date of publication of application:
**13.12.1995 Bulletin 1995/50**

(62) Document number(s) of the earlier application(s) in
accordance with Art. 76 EPC:
**89116667.0 / 0 358 229**

(73) Proprietor: **FUJITSU LIMITED**
**Kawasaki-shi, Kanagawa 211 (JP)**

(72) Inventors:
• **Takeuchi, Atsushi**
  **Hadano-shi, Kanagawa 257 (JP)**
• **Muto, Shunichi**
  **Atsugi-shi, Kanagawa, 243-01 (JP)**

(74) Representative:
**Schmidt-Evers, Jürgen, Dipl.-Ing. et al**
**Patentanwälte Mitscherlich & Partner,**
**Sonnenstrasse 33**
**80331 München (DE)**

(56) References cited:
• **APPLIED PHYSICS LETTERS, 30 NOVEMBER 1987, USA, vol. 51, no. 22, ISSN 0003-6951, pages 1786-1788, LITTLE J W ET AL 'Extremely low-intensity optical nonlinearity in asymmetric coupled quantum wells'**
• **JAPANESE JOURNAL OF APPLIED PHYSICS, PART 2 (LETTERS), JULY 1989, JAPAN, vol. 28, no. 7, ISSN 0021-4922, pages L1098-L1100, XP 000073531 TACKEUCHI A ET AL 'Fast recovery of excitonic absorption peaks in tunneling bi-quantum-well structures'**

**Description**

BACKGROUND OF THE INVENTION

The present invention generally relates to semiconductor optical devices and more particularly to a semiconductor optical device having a non-linear operational characteristic.

Conventionally, a so-called non-linear semiconductor optical device is studied in relation to optically operated optical switches, optical bistable devices, optically addressed optical memories and the like. The principle of such device is based on switching of its state between an operational state and a non-operational state triggered by irradiation or interruption of a control optical beam such that the transmission of an optical beam or information optical beam is controlled responsive to the control optical beam. For example, the device allows transmission of the information optical beam in the operational state and prohibits the transmission of the information optical beam in the non-operational state, or vice versa.

In such a semiconductor optical device, it is required that the device has an excellent high frequency response particularly when the device is to be used for optical logic operation in optical computers and the like. Further, it is desired that the duration of the non-operational state of the device is controlled as desired.

Document US-A-4 720 309 discloses a semiconductor optical device comprising the features of the preamble of Claim 1.

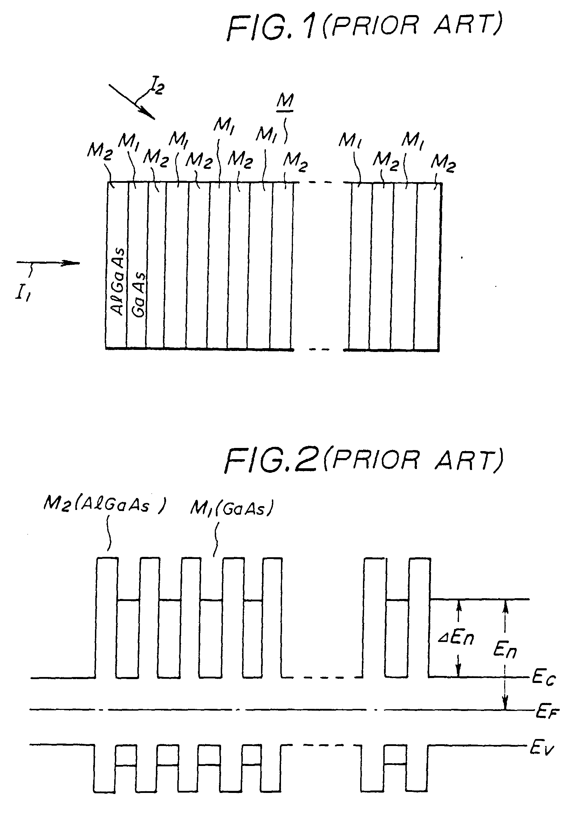

Conventionally, such a non-linear semiconductor optical device is constructed as illustrated in FIG.1, wherein the device represented by $\underline{M}$ has a superlattice structure based on a repetition of a structural unit which comprises a first material layer M1 of gallium arsenide (GaAs) having a small band gap and a pair of second material layers M2 of aluminium gallium arsenide (AlGaAs) having a large band gap disposed at both sides of the first material layer M1.

FIG.2 shows the energy band structure of this prior art device. In the drawing, the Fermi level is represented by $E_F$, the valence band is represented by Ev, and the conduction band is represented by Ec. Note that the energy gap or band gap between the conduction band Ec and the valence band Ev is substantially larger in the second material layer M2 than in the first material layer M1. Such a first material layer M1 sandwiched between the second material layers M2 forms a band structure known as quantum well in which the energy level of electron $\Delta$En measured from the bottom edge of the conduction band Ec of the first material layer M1 is given approximately as

$$\Delta En = (h^2/8m).(n/L)^2 \tag{1}$$

where $\underline{n}$ stands for an integer, $\underline{m}$ stands for the effective mass of electron in the first material layer M1, $\underline{h}$ stands for the Planck's constant, and $\underline{L}$ stands for a thickness of the first material layer M1. Note that the energy level of electron in the quantum well depends on the effective mass $\underline{m}$ of the electron and the thickness $\underline{L}$ of the first material layer M1.

In such a structure, it is known that there is formed an exciton which is an elementary excitation formed by electron and hole bound each other by Coulomb interaction, at an energy level slightly lower than the aforementioned energy level by an amount

$$8\mu e^4 \pi^2/(k^2 h^2) \tag{2}$$

where $\mu$ stands for the reduced mass of electron and hole, $\underline{k}$ stands for the dielectric constant of the first material, $\underline{h}$ stands for the Planck's constant and $\underline{e}$ stands for the elementary electric charge.

In operation, the wavelength of the information optical beam to be controlled by the device is chosen such that the beam causes a resonance with the excitons existing in the layer M1, and the wavelength of the control optical beam for triggering the switching of the device is set such that it excites free electrons to an energy level close to that of the excitons already existing in the layer M1 or it excites the excitons having the foregoing energy level.

Next, the principle of operation of this prior art device will be described with reference to FIG.1. When a control optical beam $I_2$ is irradiated to the device under a state that the device is irradiated further by an information optical beam $I_1$ as illustrated in FIG.1, the energy transferred to the device from the optical beam $I_2$ causes excitation of the free electrons or excitons as already described. The free electrons thus excited causes screening of the Coulomb interaction which in turn disturbs the formation of excitons. The excitation of excitons by the control optical beam also disturbs the formation of the excitons by releasing the free electron. When such an impediment against the formation of exciton occurs, the absorption of the information optical beam $I_1$ by the excitons in the layer M1 is reduced. This means that the transparency of the device is increased and the transmittance of the device is increased. The transition from the operational state to the non-operational state is extremely fast and can be achieved in a matter of about 500 femtoseconds. Thus, the optically controlled switching of such a non-linear optical semiconductor device provides a possibility of optically operated logic devices such as optical switches, optical bistable devices, optically addressed memories and the like.

Such an optical control of the transmittance should be observed also in a bulk crystal of gallium arsenide and the like. However, such a bulk crystal involves a significant degree of thermal excitations at the room temperature which obscure the observation of excitons. Thus, the construction of the non-linear optical semiconductor devices utilizing optical interaction of light with excitons on the basis of the bulk crystal is extremely difficult. By designing the device to have the superlattice structure which confines the excitons two-dimensionally, the excitons become observable clearly and thus the non-linear semiconductor optical device for the first time becomes the matter of reality.

In the bulk crystal, the diameter of a free exciton at the 1S state is represented as

$$r = h^2\varepsilon/(2\pi^2 e^2\mu) \qquad (3)$$

where $\mu$ stands for the reduced mass of electron and hole, $\varepsilon$ stands for the dielectric constant, $\underline{h}$ is the Planck's constant and $\underline{e}$ stands for the elementary electric charge. Thus, the thickness of the first layer M1 has to be substantially equal to or smaller than the diameter $\underline{r}$ given by Eq. (3). When gallium arsenide is used for the first layer M1, $\underline{r}$ is about 280 Å.

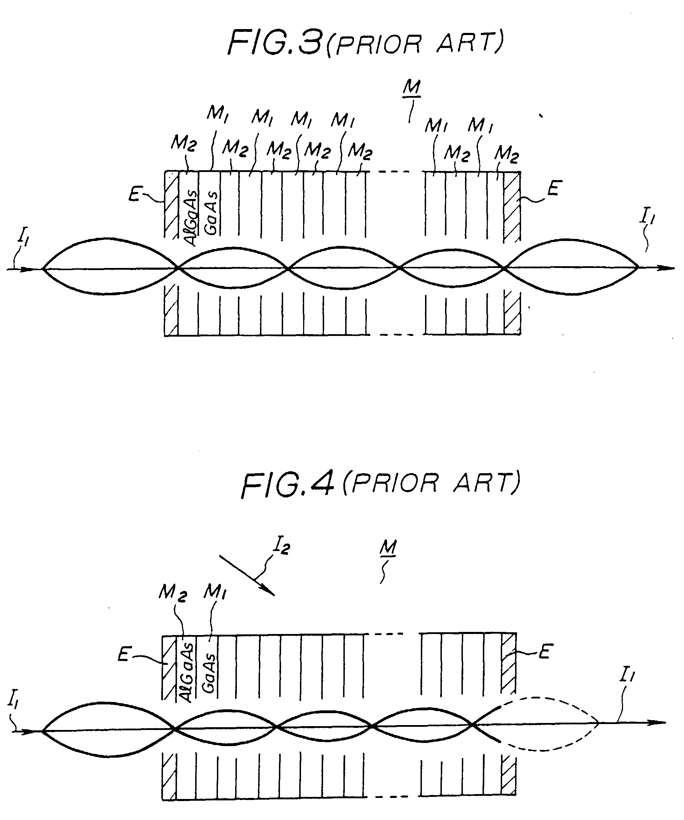

FIG.3 shows another prior art non-linear optical semiconductor device comprising the superlattice structure body $\underline{M}$ already described with reference to FIG.1 wherein there is further provided a pair of mirrors $\underline{E}$ at both ends of the body $\underline{M}$ to form a Fabry-Pérot resonator. The mirror $\underline{E}$ may be a dielectric multilayer mirror comprising a number of silicon oxide layers and aluminium oxide layers stacked alternately. As the super lattice structure body $\underline{M}$ used in the device of FIG.3 is identical to the superlattice structure $\underline{M}$ in FIG.1, the band structure for the device of FIG.3 is identical to that shown in FIG.2.

The device of FIG.3 is constructed such that, when the information optical beam $I_1$ is irradiated on the device under a state that the control optical beam $I_2$ is not incident thereupon, there holds a relation

$$m\lambda/2 = nL$$

where $\underline{m}$ is an integer, $\lambda$ stands for the wavelength of the optical beam $I_1$, $\underline{L}$ stands for the thickness of the superlattice structure $\underline{M}$, and $\underline{n}$ stands for the refractive index of the superlattice structure $\underline{M}$. Note that the foregoing relation indicates the resonance and the thickness $\underline{L}$ and the refractive index $\underline{n}$ of the device is set such that there holds a resonance when the device is irradiated only by the information optical beam $I_1$.

When the above condition is met, the absorption of the information optical beam $I_1$ by the device becomes minimum and the optical beam $I_1$ passes through the device without substantial absorption. When, on the other hand, that the device is further irradiated by the control optical beam $I_2$, the free electrons causing the screening of the Coulomb interaction are excited or the excitation of excitons having energy level corresponding to the control optical beam $I_2$ is caused. As a result, formation of the excitons interacting with the information optical beam $I_1$ is disturbed or reduced and the refractive index $\underline{n}$ of the superlattice structure $\underline{M}$ is changed. When the refractive index $\underline{n}$ is changed, the foregoing relation corresponding to the resonance does not hold anymore. This state is illustrated in FIG.4. Note that the reflection of the optical beam $I_1$ by the mirror $\underline{E}$ does not occur at the node of the optical beam because of the change of the effective optical path between the pair of mirrors $\underline{E}$. As a result, the absorption to the information optical beam $I_1$ is increased and the transmission of the beam $I_1$ through the device is interrupted. Thus, this device of FIG. 3, too, controls the transmission of the information optical beam responsive to the irradiation and interruption of the control optical beam $I_2$.

In addition to the aforementioned devices, there are a number of possibilities to construct such a non-linear semiconductor optical device wherein the control of the transmission of optical beam is achieved by irradiation of another optical beam. Some typical examples are as follows.

a) A device constructed such that it is opaque when the control optical beam is not irradiated but becomes transparent when the control optical beam is irradiated. In such a device, the resonance appears only when the control optical beam is irradiated additionally to the information optical beam.
b) A device of which state is changed between a completely off-resonant state $((m + 1/2)\lambda/2 = nL)$ and an incompletely off-resonant state. This device is further divided into a first type in which the completely off-resonant state is achieved responsive to the irradiation of the control optical beam and thereby causing transition from a transparent state to an opaque state, and a second type in which the incompletely off-resonant state is achieved responsive to the irradiation of the control optical beam and thereby causing transition from the opaque state to the transparent state.

c) A device of which state is switched between a first off-resonant state close to the resonant state and a second off-resonant state which is close to the completely off-resonant state.

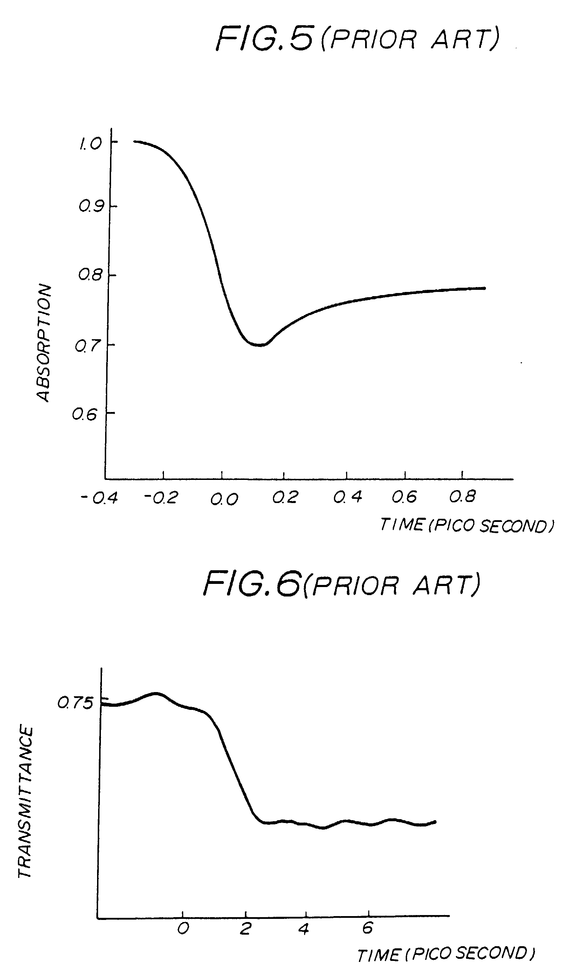

In any of these prior art devices there is a problem in that recovery from the non-operational state to the operational state is substantially longer than transition from the operational state to the non-operational state. FIG.5 shows a response of the device obtained when a control optical beam is irradiated on the device of FIG.1 in a form of optical pulse with a pulse width of 100 femtosecond. As can be seen from the plot, the time needed to cause transition from the operational state to the non-operational state is only about 0.4 picoseconds while the time needed to recover the original operational state is much longer. The reason of this slow recovery is attributed to the long relaxation time for removing or expelling the free electrons from the first layer M1 after the termination of the control optical beam. Such a slow removal of electron deteriorates the high frequency characteristic of the non-linear optical semiconductor device significantly and prohibits the repetitive operation of the device at high speed.

FIG.6 shows the response for the case of the device of FIG.3. In this device, too, the recovery of the operational state is very slow or even worse than the response of FIG.5. As long as the non-linear semiconductor optical device has such a slow response for the recovery of the operational state, the device cannot be used for the high speed optical logic devices.

## SUMMARY OF THE INVENTION

Accordingly, it is a general object of the present invention to provide a novel and useful non-linear semiconductor optical device wherein the aforementioned problems are eliminated.

Another and more specific object of the present invention is to provide a non-linear semiconductor optical device having an improved response particularly at high frequency.

Another object of the present invention is to provide a non-linear semiconductor optical device which changes its state from an operational state to non-operational state responsive to an irradiation of a control optical beam, wherein the device can be designed to have a desired duration for recovering the original operational state.

This object is achieved with a semiconductor optical device according to claim 1.

According to the present invention, the composition and thickness of the first and second material layers are determined such that the energy difference between the quantum level of hole in the first material layer and the top edge of the valence band of the second material layer is substantially smaller than that between the bottom edge of the conduction band of the second material layer and the quantum level of electron interacting with the optical beam in the first material layer. By choosing the composition and thickness as such, the tunneling of hole through the second material layer from the first material layer to the third material layer is faciliated and the preferential residence of hole in the first material layer after the removal of the free electron from the first material layer is avoided. Associated therewith, the formation of space charge causing the deformation of energy band structure which ultimately leads to the cancellation of free removal of the electron from the first material layer is avoided.

Other objects and further features of the present invention will become apparent from the following detailed description when read in conjunction with attached drawings.

## BRIEF DESCRIPTION OF THE DRAWINGS

Fig. 1 is a schematical view showing a prior art non-linear semiconductor optical device;
Fig. 2 is an energy band diagram showing an energy band structure of the device of Fig. 1;
Fig. 3 is a schematical view showing another prior art non-linear semiconductor optical device in a first state;
Fig. 4 is a schematical view showing the device of Fig. 3 in a second state;
Fig. 5 is a graph showing a response of the device of Fig. 1;
Fig. 6 is a graph similar to Fig. 5 showing the response of the device of Fig. 3;
Fig. 7 is a schematical view showing the construction of non-linear optical semiconductor device;
Fig. 8 is an enlarged view showing an essential part of the device of Fig. 7 together with its band structure for explanation of the principle of the device;
Fig. 9 is a diagram showing the energy band structure of the device of Fig. 7 in correspondence to the structure shown in Fig. 7;
Fig. 10 is a diagram showing the state density of the device of Fig. 7;
Fig. 11 is a graph showing the response of the device of Fig. 7;
Fig. 12 is a perspective view showing an optical device constructed on the basis of the device of Fig. 7;

Figs. 13 (A) und (B) are diagrams showing steps of constructing the device of Fig. 12;

Fig. 14 is a schematical view showing a second non-linear semiconductor optical device;

Fig. 15 is a diagram showing a third non-linear semiconductor optical device schematically together with its energy band diagram;

Fig. 16 is a diagram showing a fourth non-linear semiconductor optical device of Fig. 15 together with a corresponding energy band diagram;

Figs. 17(A) - (C) are energy band diagrams showing formation of a space charge and distortion of the band structure associated with tunneling of electron together with an embodiment of the non-linear semiconductor optical device of the present invention, wherein these problems are eliminated;

Fig. 18 is a diagram showing a state density distribution formed in a fifth non-linear semiconductor optical device;

Fig. 19 is a diagram showing an essential part of the non-linear semiconductor optical device of Fig. 18;

Figs. 20(A) - (H) are diagrams showing steps of constructing the device of Fig. 19;

Fig. 21 is a diagram showing another state density distribution in a modification of the device of Fig. 18;

Fig. 22 is a diagram showing a structure of the device for realizing the state density distribution of Fig. 21;

Fig. 23 (A) and (B) are diagrams showing a step of constructing the structure of Fig. 22 and an enlarged view thereof respectively; and

Fig. 24 is a diagram schematically showing a non-linear reflector constructed on the basis of the non-linear semiconductor optical device of the present invention.

## DETAILED DESCRIPTION

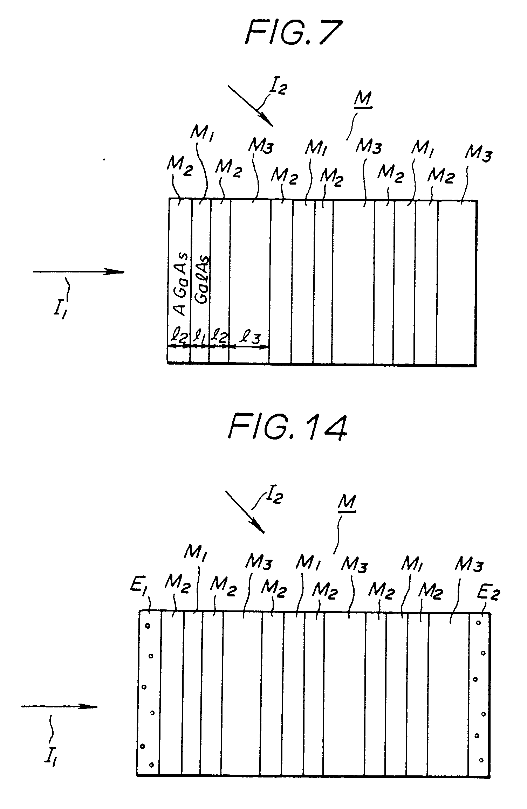

Fig. 7 shows a non-linear semiconductor optical device. Referring to the drawing, the device comprises a stacked body $\underline{M}$ which in turn comprises a first material layer M1 having a band gap Eg1, a second material layer M2 disposed at both sides of the material layer M1 and having a band gap Eg2 which is substantially larger than Eg1, and a third material layer M3 having a band gap Eg3 and disposed outside of the material layer M2. The material layers M1, M2 and M3 form a structural unit which is repeated in the stacked body $\underline{M}$. Thus, the stacked body $\underline{M}$ has a superlattice structure with a unit cell comprising the material layer M1, the two material layers M2 at both sides of the material layer M1 and the material layer M3 at one side of the material layer M2.

In this device, the first material layer M1 and the third material layer M3 comprise gallium arsenide while the second material layer M2 comprises aluminium gallium arsenide having a composition of $Al_xGa_{1-x}As$ where $x = 0.2 - 1$ and may have a composition of $Al_{0.51}Ga_{0.49}As$, for example. As the first material layer M1 and the third material layer M3 comprise a same material, the band gap Eg1 and the band gap Eg3 are equal.

Further, the material layers M1, M2 and M3 have respective thickness of $l_1$, $l_2$ and $l_3$ wherein the thickness $l_1$ of the layer M1 has to be set equal to or smaller than 280 Å so as to allow existence of excitons in the layer M1. Further, the thickness $l_1$ and $l_3$ are set different from each other so that the material layer M3 has a band structure which is different from that of the material layer M1. In the device of FIG.7, the thickness $l_1$ of the layer M1 is set to 45 Å while the thickness $l_3$ of the layer M3 is set to 90 Å. Further, in order to allow the free electrons excited in the material layer M1 to escape freely into the material layer M3 through the material layer M2, the thickness $l_2$ of the layer M2 is set to a value enabling the tunneling of electron through the material layer M2. In the device of FIG.7, the thickness $l_2$ is set to 40 Å. The structure of FIG.7 may be formed by well established process such as molecular beam epitaxy (MBE).

In the device of FIG.7, an information optical beam $l_1$ is irradiated so as to pass through the layers M1 - M3 sequentially while another optical beam $l_2$ is irradiated on the stacked body $\underline{M}$ obliquely. The optical beam $l_1$ has a wavelength set such that the beam interacts with excitons formed in the first material layer M1 while the optical beam $l_2$ has a wavelength or energy which is sufficient to excite free electrons in the layer M1 to an energy level close to that of the excitons. Further, the optical beam $l_2$ excites the excitons into electrons and holes, thus reducing the formation of the excitons. When the formation of the excitons in the layer M1 is reduced by the irradiation of the optical beam, the refractive index of the stacked body $\underline{M}$ is changed and the transmittance of the optical beam $l_1$ through the body $\underline{M}$ is changed. Hereinafter, the optical beam $l_2$ will be referred to as a control optical beam. The control optical beam $l_2$ is required to have a wavelength or energy which is sufficient to excite electrons to the energy level close to that of the exciton. Note that the wavelength of the optical beam $l_2$ may be identical to that of the optical beam $l_1$. Further, the direction of incidence of the optical beams $l_1$ and $l_2$ are not limited as illustrated but both optical beams may be incident from a same direction. Further, other incidence angles of the optical beams $l_1$ and $l_2$ are also possible. The operation so far described is identical to that of the prior art device described with reference to FIGS.1 - 3.

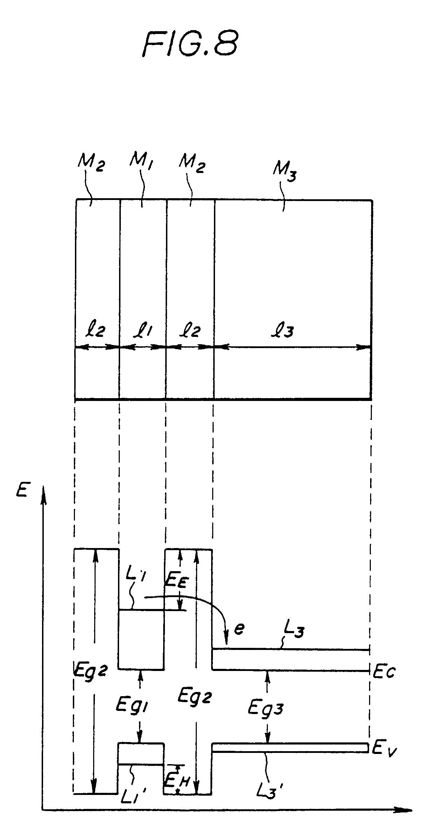

Next, the operation of the device of Fig. 7 will be described with referenceto Fig. 8 showing an essential part of the device together with the band structure. In the drawing, the quantum level of electron in the material layer M1 is designated by L1, the quantum level of electron in the material layer M3 is designated by L3, the quantum level of hole in the material layer M1 is designated by L1', and the quantum level of hole in the material layer M3 is designated by L3'. In the description hereinafter, it is assumed that these quantum levels correspond to the ground state. However, it should be understood that the present invention is by no means limited as such. In such a so-called quantum well structure wherein the thin material layer M1 is confined between two material layers M2 having a very large band gap Eg2, it is known that the electrons form discrete quantum levels above the conduction band Ec. In other words, there are still other discrete quantum levels (not shown) above the levels L1 and L3 in correspondence to the excited states.

In the device of FIG.7, the thickness $l_3$ of the third material layer M3 is set such that in all the quantum levels formed in the layer M3, the energy level does not coincide with at least one quantum level of electron formed in the first material layer M1. Note that the relation between the quantum level and the layer thickness is given by Eq.(1) previously described. More specifically, as a result of choice of the thickness $l_3$, the ground level L3 in the material layer M3 is formed at a level which is energetically lower than the ground level L1 in the material layer M1. Thus, when an electron $e$ at the ground level L1 is passed through the layer M2 by tunneling from the material layer M1 to the layer M3, the electron immediately falls into the level L3 which is lower than the level L1 as indicated in FIG.8 by an arrow. In other words, the electron which has been excited by the irradiation of the control optical beam $I_2$ is immediately removed from the material layer M1 by tunneling through the material layer M2 and falling into the quantum level L3 in the material layer M3 whenever the irradiation of the control optical beam $I_2$ is terminated. Responsive thereto, the formation of the excitons in the material layer M1 is resumed.

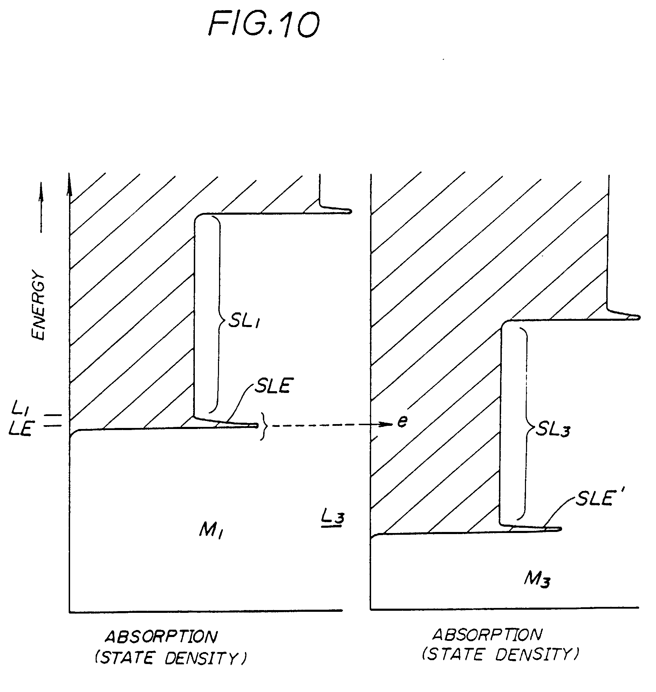

FIG.10 describes the tunneling of electron through the material layer M2 from the layer M1 to the layer M3. In the drawing, the ordinate represents the energy and the abscissa represents the state density of electron in each layer. The state density is observed as an absorption of light. Further, the energy level of exciton given by Eq.(2) approximately is represented by a symbol LE.

In the quantum well structure, the state density increases in correspondence to the discrete quantum levels stepwise with energy. Thus, a step designated in the drawing by SL1 corresponds to the quantum level L1 in the material layer M1 and a step SL3 in the drawing corresponds to the quantum level L3 in the material layer M3. As the state density is obtained from the measurement of optical absorption, there appears an absorption peak SLE corresponding to the excitons having an energy level LE in the material layer M1. Although the exciton level appears also in the material layer M3 as indicated by SLE', this level is substantially lower than the level in the material layer M1.

In the structure having such a state density distribution, the free electron $e$ having an energy close to the exciton level LE and disturbing the formation of the exciton first assumes a state having an energy same as the original energy in the material layer M1 after the electron has tunneled to the third material layer M3 through the second material layer L2, and then falls immediately to the ground level L3 along the energy band. Note that states existing above the quantum levels L1 and L3 are the the states pertinent to the two-dimensional band structure formed in the quantum well. Further, note that there are sufficient number of states to accept the electron $e$ tunneled through the material layer M2.

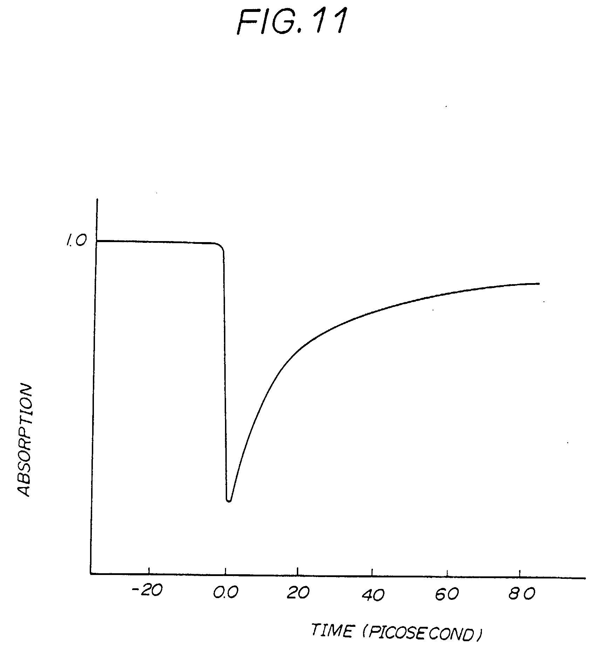

When the information optical beam $I_1$, with wavelength chosen to 790 nm for example so as to cause resonance with the excitons in the material layer M1, is irradiated as illustrated in FIG.7 while suppressing the control optical beam $I_2$, the optical beam $I_1$ is absorbed by the interaction with the excitons. Therefore the material layer M1 behaves almost opaque to the optical beam $I_1$. In this state, when the control optical beam $I_2$ having a wavelength or energy sufficient to excite electron from quantum level L1' at the valence band Ev to quantum level L1 at the conduction band Ec or to excite the excitons is irradiated as shown in FIG.7, the electrons excited or emitted disturbs the formation of the excitons and the absorption of the optical beam $I_1$ is reduced as shown in FIG.11. This second optical beam $I_2$ may have the same wavelength as that of the first optical beam $I_1$ as already described.

When the irradiation of the control optical beam $I_2$ is terminated, the free electron thus excited or formed by ionization of the excitons tunnels through the second material layer M2 to the material layer M3 in a short time period. As a result, the original large absorption is resumed in short time period as illustrated in FIG.11. By suitably choosing the layer thickness $l_1$, $l_2$ and $l_3$ as well as the materials for the layers M1, M2 and M3, the time needed to recover the original state can be reduced to as much as about 1/100 as compared to the prior art device.

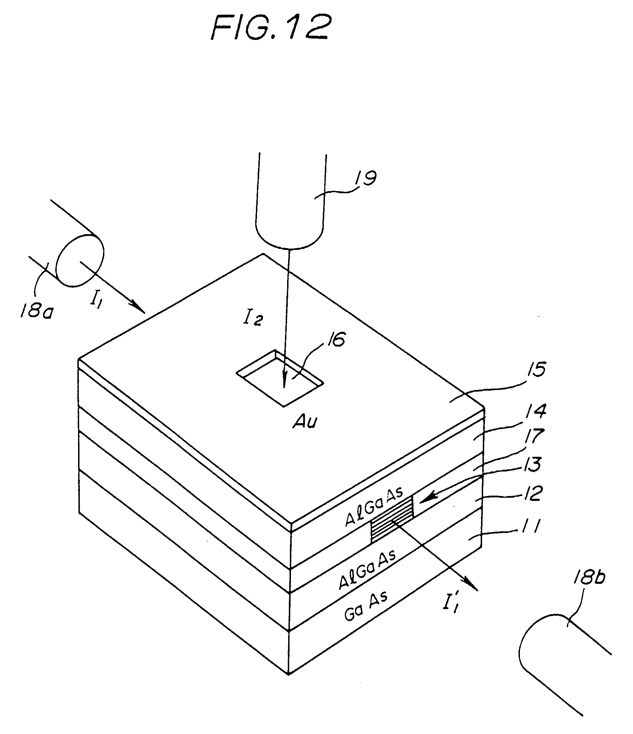

Fig. 12 shows a non-linear optical apparatus constructed based on the non-linear semiconductor optical device of Fig. 7. In this apparatus, the information optical beam $I_1$ is directed to the apparatus through an optical fiber 18a and the apparatus controls the transmission of the optical beam $I_1$ responsive to the control optical beam $I_2$ directed to the apparatus through another optical fiber 19. Responsive to the control optical beam $I_2$, the apparatus produces an output optical beam $I_1$, which is received by still another optical fiber 18b. The apparatus is constructed on a gallium arsenide substrate 11 and comprises an aluminium gallium arsenide clad layer 12 having a thickness of 2 - 3 $\mu$m on the substrate. The clad layer 12 supports a stacked body 13 corresponding to the stacked body $\underline{M}$ of FIG.7 thereon whereby the stacked body 13 is laterally supported by clad layers 17 of aluminium gallium arsenide. The stacked body 13 comprises a gallium arsenide layer having a thickness of 45 Å corresponding to the material layer M1, a pair of aluminium gallium arsenide layers with a thickness of 40 Å and has the composition of $Al_{0.5}Ga_{0.5}As$ at both sides of the gallium arsenide layer in correspondence to the material layer M2, and another gallium arsenide layer having a thickness of 90 A corresponding to the material layer M3. Each layers are stacked parallel and there is formed a superlattice structure in correspondence to the stacked body $\underline{M}$.

In the illustrated apparatus, the information optical beam $I_1$ is incident substantially parallel to the layers of the stacked body $\underline{M}$ contrary to the case shown in FIG.7 and the control optical beam $I_2$ is incident substantially vertically to the layers of the stacked body $\underline{M}$. Even in such an arrangement, the apparatus operates properly as the operation of the apparatus is based on the modulation of transmittance of the material layer M1 by the control optical beam $I_2$ incident to the material layer M1. In other words, the direction of incidence of the optical beams $I_1$ and $I_2$ to the stacked body $\underline{M}$ is not limited as shown in FIG.7 but other direction of incidence is also possible.

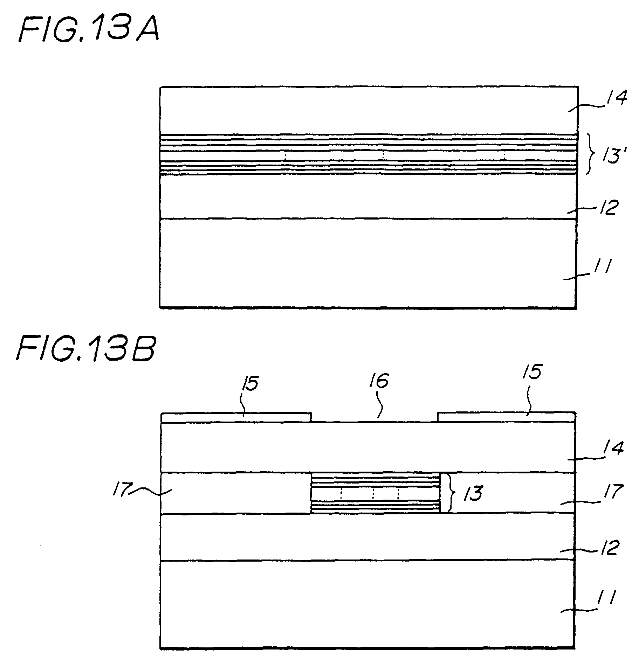

Next, the steps of constructing the apparatus of FIG.12 will be described with reference to FIGS.13(A) and (B).

In a first step, the clad layer 12 is deposited on the substrate 11 for a thickness of about 2 - 3 µm. Next, a super lattice layer 13' comprising a repetition of the fundamental structural unit comprising the aluminium gallium arsenide layer having a thickness of 40 Å and composition of $Al_{0.5}Ga_{0.5}As$, the gallium arsenide layer having a thickness of 45 Å, the aluminium gallium arsenide layer having the thickness of 40 Å and composition of $Al_{0.5}Ga_{0.5}AS$, and the gallium arsenide layer having the thickness of 90 Å, is deposited by molecular beam epitaxy (MBE) with a layer thickness corresponding to about 100 layers of the fundamental structural unit. Further, the clad layer 14 is deposited on the superlattice layer 13' for a thickness of about 2- 3 µm similarly to the clad layer 12. The deposition may also be performed by molecular beam epitaxy (MBE).

Next, a part of the clad layer 12 is applied with a photoresist (not shown) and those parts not covered by the photoresist is subjected to ion implantation of silicon so as to erase the superlattice structure from these parts. As a result, a structure shown in FIG.13(B) wherein the stacked body 13 is laterally supported by a pair of the aluminium gallium arsenide layers 17 from which the superlattice structure is erased is obtained. Note that the stacked body 13 forms an optical waveguide extending through the apparatus from a side facing the optical fiber 18a to another side facing the optical fiber 18b. Further, a protective film [15] of gold is applied to a surface of the clad layer 14 except for a region 6 acting as a window for the control optical beam $I_2$. Thus, the optical beam $I_2$ from the optical fiber 19 reaches the stacked body 13 through the window 16, thereby inducing the change of transmittance of the material layer M1.

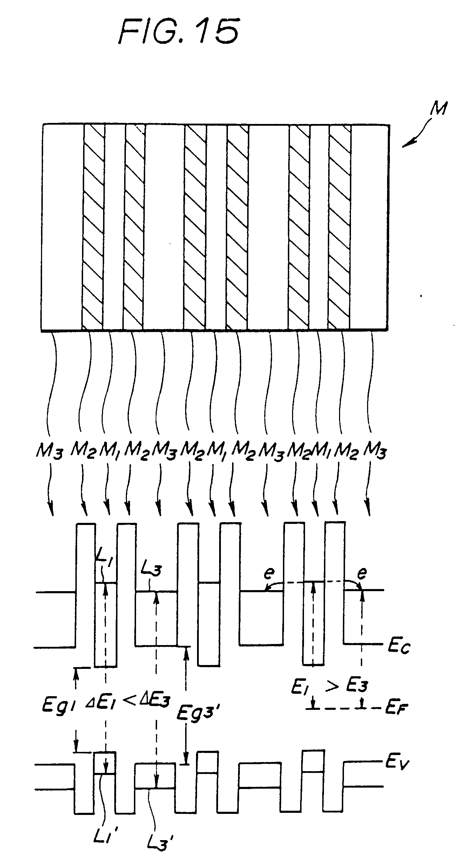

Next, a second non-linear optical device will be described with reference to Fig. 14. In the drawing, these parts identical to those corresponding parts in the preceding drawings are given identical reference numerals and the description thereof will be omitted.

In the present device metal layers $E_1$ and $E_2$ each having a thickness of about 200 Å are provided at both sides of the stacked body $\underline{M}$ already described with reference to FIG.7. The metal layers $E_1$ and $E_2$ act as a mirror and there is formed a Fabry-Pérot resonator. In this device the thickness and materials of the layers M1, M2 and M3 are set such that, under a condition in which only the information optical beam $I_1$ is irradiated on the stacked body $\underline{M}$, there holds a relation

$$m\lambda/2 = nL$$

where $\underline{m}$ is an integer, $\underline{L}$ stands for the thickness of the stacked body $\underline{M}$, and $\underline{n}$ stands for the refractive index of the stacked body $\underline{M}$ having the superlattice structure. As already described with reference to the prior art device of FIG.3, the relation represents the condition of resonance. Under this condition, the absorption of the incident information optical beam $I_1$ becomes extremely small and the optical beam $I_1$ passes through the device substantially freely.

When the control optical beam $I_2$ having the wavelength chosen as already described is incident further to the stacked body $\underline{M}$ as illustrated in FIG.14, the optical beam $I_2$ excites the free electron to the energy level close to the excitons formed in the first material layer M1 or excites the excitons. As a result, the free electrons are formed and the free electrons thus formed disturbs the formation of the excitons in the first material layer as already described. Such a decrease of excitons in turn causes the change of refractive index $\underline{n}$ of the stacked layer $\underline{M}$ and thereby the foregoing relation is lost. In other words, the resonance for the optical beam $I_1$ is lost and the absorption of the optical beam $I_1$ increases significantly. This change of the absorption is extremely fast similarly to the case of the device of Fig. 7.

When the irradiation of the control optical beam $I_2$ is interrupted, the free electrons formed in the material layer M1 either by excitation or by ionization of the excitons dissipate into the third material layer M3 quickly by tunneling through the second material layer M2. Thus, the absorption of the stacked body $\underline{M}$ returns quickly to the original state similarly to the case shown in FIG.11 and the resonance before the irradiation of the optical beam $I_2$ is resumed. Similarly to the case of the first device, the time needed to recover the original resonance can be reduced to about 1/100 as compared to the prior art device or adjusted as desired by designing the thickness and composition of the material layers M1, M2 and M3.

Next, a third non-linear optical device will be described.

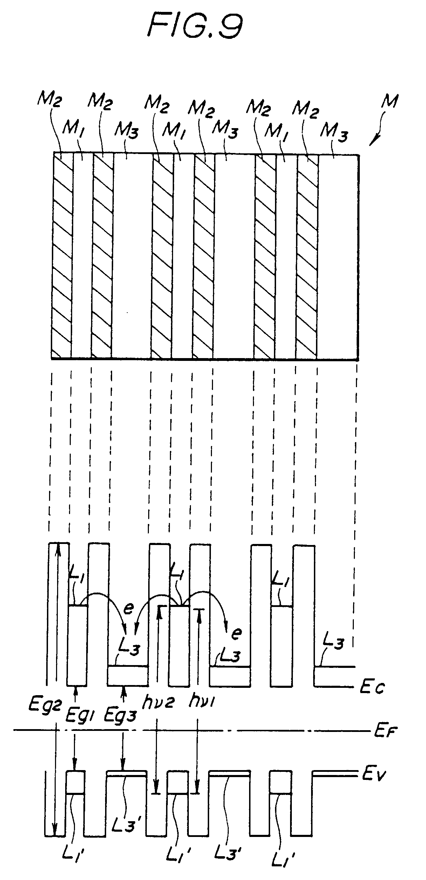

Before starting the description of this device , problems associated with the first device will be reviewed with reference to FIG.9. From the band diagram of this drawing, it will be understood that the information optical beam $I_1$ interacting with the excitons in the layer M1 has an energy $h_{v1}$ which is sufficient to excite the electrons at the quantum level L3' in the material layer M3 to a level higher than the quantum L3 while leaving a hole at the level L3'. A similar excitation occurs also when the control optical beam having an energy $h_{v2}$ is incident. When such an excitation occurs in the material layer M3, there arises a problem in that the information optical beam $I_1$ is absorbed by the third material layer M3.

The present device solves this problem by the band structure shown in FIG.15 by suitably choosing the layer thickness of the material layers M1, M2 and M3 as well as by suitably choosing the chemical composition of the materials.

Referring to FIG.15, this non-linear optical semiconductor device is designed to have an energy band structure wherein an energy $\Delta E_1$ needed to excite an electron from the level L1' in the first material layer M1 to the ground state L1 and at the same time to leave a hole at the energy level L1' is set smaller than the corresponding energy $\Delta E_3$ in the material layer M3. In other words there holds a relation $\Delta E_1 < \Delta E_3$. Note that the quantum levels L1 and L1' in the first material layer M1 are not necessarily be corresponding to the ground state but the levels L3 and L3' in the third material layer M3 are assumed to be the ground state. By designing the device as such, the energy of the optical beam $I_1$ becomes insufficient to cause the excitation from the level L3' to the level L3 in the material layer M3.

Further, in order to enable dissipation of the free electron from the material layer M1 to the third material layer M3 by tunneling, the band structure is designed such that the energy $E_1$ of the ground state L1 measured from the Fermi level $E_F$ is substantailly larger than the energy $E_3$ of the ground state L3 also measured from the Fermi level $E_F$. In other words, the band structure is designed to satisfy a relation $E_1 > E_3$. In order to realize such a band structure, the present embodiment uses a material having a band gap Eg3' which is larger than the band gap Eg1 of the material layer M1.

In the illustrated example, the first material layer M1 comprises gallium arsenide having a thickness of 35 Å, the second material layer M2 comprises aluminium gallium arsenide having a thickness of 17 Å, and the third material layer M3 comprises aluminium gallium arsenide with a composition of $Al_{0.15}Ga_{0.85}As$ with a thickness of 90 Å. Each of the layers are deposited by molecular beam epitaxy and the structural unit comprising the layers M1, M2 and M3 are stacked for about 100 layers.

According to the present device, the transmission loss of the optical beam $I_1$ by the third material layer $M_3$ is greatly improved in addition to the quick transition to the high absorption state and quick recovery to the original state.

In the present device the composition of the material layers M1, M2 and M3 is not limited as described but use of other materials such as aluminium gallium arsenide having a general formula of $Al_xGa_{1-x}As$ or aluminium arsenide may also be possible. Further, use of indium gallium arsenide (InGaAs) for the material layers M1 and M3 and use of indium aluminium arsenide (InAlAs) for the material layer M2 is also possible.

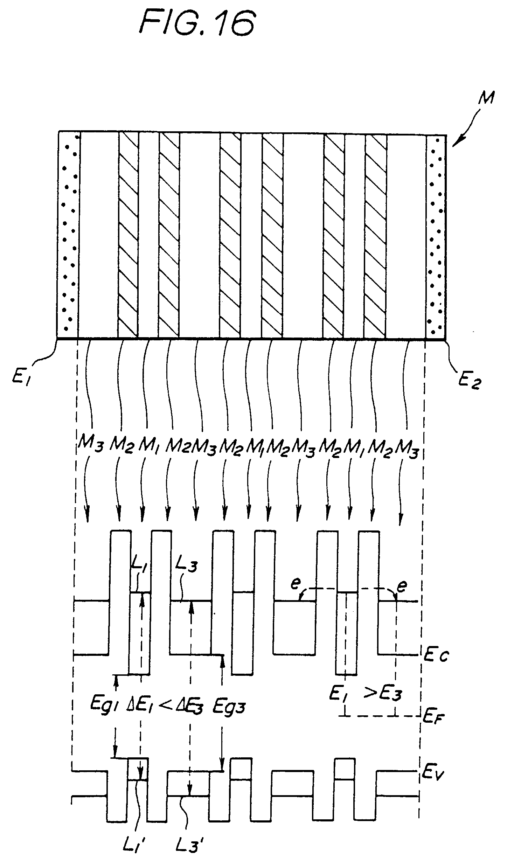

Next, a fourth non-linear optical device will be described with reference to FIG.16. In the drawing, these parts identical to those corresponding parts already described with reference to the preceding drawings are given identical reference numerals and the description thereof will be omitted.

In this device the mirrors $E_1$ and $E_2$ are provided at both sides of the stacked body $\underline{M}$ having the band structure identical to that of FIG.15. Further, the thickness and composition of the material layers M1, M2 and M3 are set such that the equation of resonance $m\lambda/2 = nL$ is met when the device is irradiated by the information optical beam $I_1$ alone. Responsive to the irradiation by the optical beam $I_2$, the condition of resonance is lost similarly to the case of the device shown in FIG.14, and the transmittance of the optical beam $I_1$ is reduced quickly. Further, when the optical beam $I_2$ is irradiated, the transmittance recovers rapidly. The device of Fig. 16 has the feature similar to that of the device of FIG. 15 as the band structure thereof is substantially identical to that of the device of FIG.16. In other words, the absorption of the optical beam $I_1$ and $I_2$ by the material layer M3 is effectively avoided. As other features and operation of the device is obvious from the foregoing descriptions, further description of this device will be omitted.

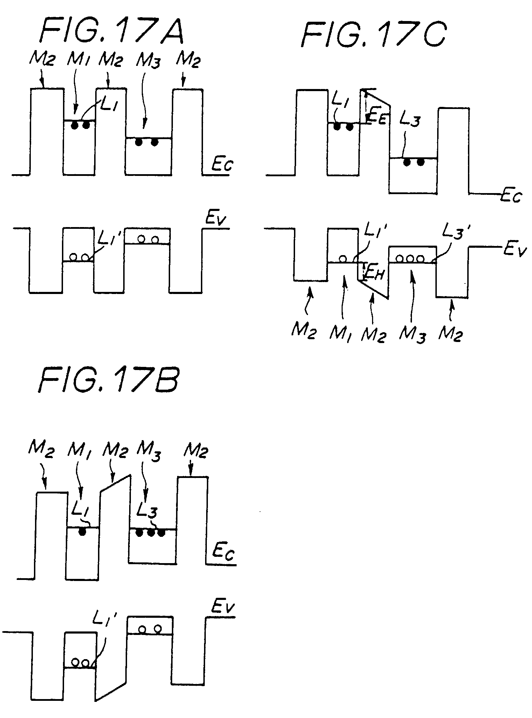

Next, an embodiment of the present invention will be described with reference to FIGS.17(A) - (C).

In the devices described heretofore, the recovery of the original or initial state of the device is achieved rapidly because of the tunneling of electron from the material layer M1 to the material layer M3 through the material layer M2. Such a tunneling occurs easily as the effective mass of electron is small in such compound semiconductors forming the material layers M1, M2 or M3. On the other hand, holes in such a compound semiconductors have a large effective mass which is about ten times larger than that of electron. As a result, the wave function of the hole does not have sufficient spreading to allow the holes to pass through the material layer M2 by tunneling. Thus, the holes reside in the first material layer M1 which results in the separation of electron and hole. Such a separation causes formation of space charge across the layers M1 and M3.

FIG.17(A) shows a band diagram substantially identical to that of FIG.9 which corresponds to the state where there is no space charge formed. FIG.17(B), on the other hand, shows a case in which there appears separation of the electron and hole as a result of the preferential tunneling of electron from the layer M1 to the layer M3. As can be seen from FIG.17(B), the formation of the space charge causes an energetical rise of the material layer M3 relative to the material layer M1 which ultimately leads to a state illustrated therein in which the energy level of the quantum state L1 of electron in the layer M1 is virtually equal to the energy level of the quantum state L3. When such a situation occurs, the dissipation of electrons to the material layer M3 by tunneling does not occur anymore as the energy levels of electrons at both sides of the material layer are identical. Thus, the quick recovery to the initial state is no longer possible and the response of the device becomes substantially identical to that of the prior art device where there is no third material layer M3.

In the present embodiment, the composition and layer thickness of the material layers M1, M2 and M3 are selected such that the hole experiences a potential barrier illustrated in FIG.17(C) at the boundary between the layer M1 and layer M2. Referring to FIG.17(C), there exists a discontinuity $E_H$ in the valence band Ev at the aforementioned boundary such that the discontinuity $E_H$ is substantially smaller than the discontinuity $E_E$ in the conduction band Ec at the same boundary. Note that the discontinuity $E_E$ acts as the barrier for the electron entering to the layer M2 from the layer M1. Preferably, the discontinuity $E_H$ is set smaller by one-fifth to one-tenth of the discontinuity $E_E$. In such a structure, the probability of the hole tunneling through the layer M2 becomes substantially equal to or larger than the probability of the electron tunneling through the layer M1. Thus, the hole tunnels efficiently or preferentially through the material layer M2 from the layer M1 to the layer M3 and there is established a band structure as shown in FIG.17 (C) which is substantailly opposite to the band structure shown in FIG.17(B). In the band structure of FIG.17(C), note that there is formed a space charge which modifies the band structure such that the energy level of the hole at the state L1' in the material layer M1 and the energy level of the hole at the state L3' in the material layer M3 become ultimately identical. In such a state, the energy level of the layer M3 is decreased as compared to the case of FIG.17 (A) where there is no space charge and the level L3 is maintained lower than the level L1. As a result, the tunneling of the free electron from the material layer M1 to the material layer M3 is always guaranteed and the recovery of the original operational state is achieved in a short time period. Further, as the level L3 is set lower than the level L1 as a result of the equalization of the level of hole at the states L1' and L3', the removal of the free electron from the material layer M1 after the termination of the control optical beam $I_2$ is further facilitated.

Such a band structure is realized by choosing the material and the layer thickness of the material layers M1, M2 and M3 as follows.

First material layer M1: $In_{0.53}Ga_{0.47}As$ stacked for 16 atomic layers ($= 46.9$ Å thickness).
Second material layer M2: $In_{0.31}Al_{0.69}As_{0.82}Sb_{0.18}$ stacked for 9 atomic layers ($= 26.4$ Å thickness).
Third material layer M3: $In_{0.53}Ga_{0.47}As$ stacked for 30 atomic layers ($= 87.9$ Å thickness).

These layers may be formed by known molecular beam epitaxy or metal-organic chemical vapor deposition.

Next, a fifth non-linear semiconductor optical device will be described.

As already noted with reference to the description of the third device, the device having the band structure of FIG.9 has a problem of absorption of the information optical beam $I_1$ by the third material layer M3. As described therein, such an absorption is caused by the excitation of the optical beams $I_1$ and $I_2$ respectively having the energies hv1 and hv2 and at the same time by the number of states or state density which the excited electron or hole can occupy in the material layer M3. In other words, there will be no transition if there is no state which the excited electrons or holes can occupy even when the optical beams having the foregoing energies are irradiated. Associated therewith, there will be no absorption.

In the two-dimensional quantum well structure described heretofore, however, the state density increases stepwise with energy as illustrated in FIG.10 and there always exists a substantially large state density such as SL3 for accommodating the electrons tunneled to the material layer M3. As the state density remains constant in each step, the value of the state density in the region SL3 is equal to the state density at the ground level L3. In such a band structure, the incident optical beam $I_1$ or $I_2$ causes a substantial transition of electrons in the material layer M3 to the energy level close to that of the electron $\underline{e}$. Thus, a substantial absorption of the incident optical beams $I_1$ and $I_2$ by the material layer M3 is inevitable.

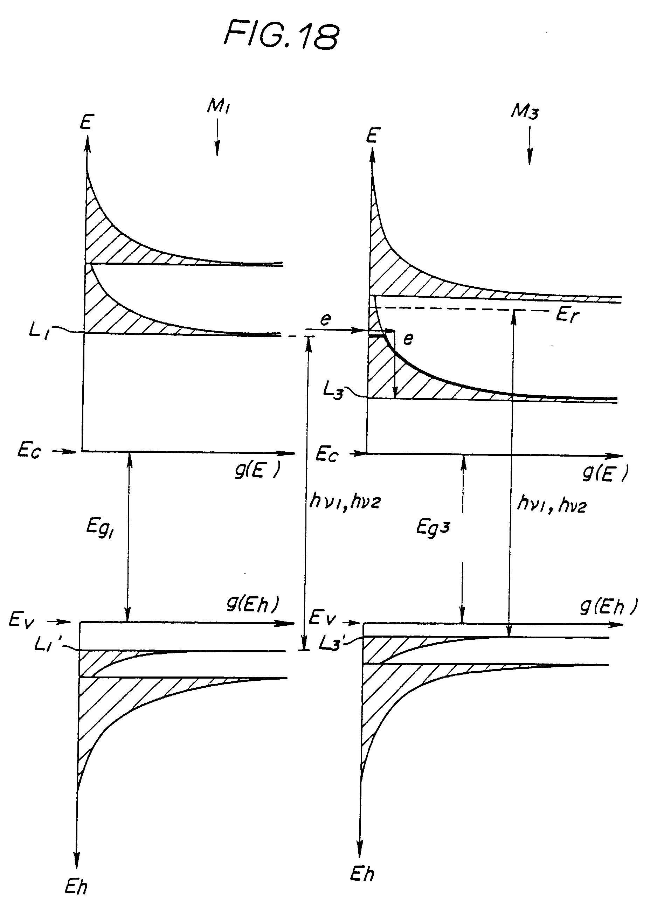

In the non-linear optical semiconductor device, the probability of transition of electrons can be decreased significantly if one could design the band structure such that the state density represented as g(E) decreases rapidly with energy above the region of the level L3 as illustrated in FIG.18. This is because the number of states to be occupied by the excited electrons is reduced and thus the probability of transition is decreased even if there is an irradiation of the optical beams having the energies $h_{v1}$ and $h_{v2}$ which is sufficient to cause the excitation of electron from the level L3' to a level Er corresponding to the energy level of excitons in the material layer M3. Thus, the band structure shown in FIG.18 can effectively reduce the absorption of the optical beams $I_1$ and $I_2$ by the third material layer M3. In this structure, the number of states which is occupied by the electron $\underline{e}$ tunneling through the material layer M2 is also decreased. However, such a decrease in the state density does not affect the effective removal of electron as the state density increases rapidly with decreasing energy as represented in the drawing by a thick line.

Thus, if one could realize the state density shown in FIG.18, the loss of the optical beam $I_1$ by the third material layer M3 can be reduced significantly. In FIG.18, the energy of the hole is represented by Eh.

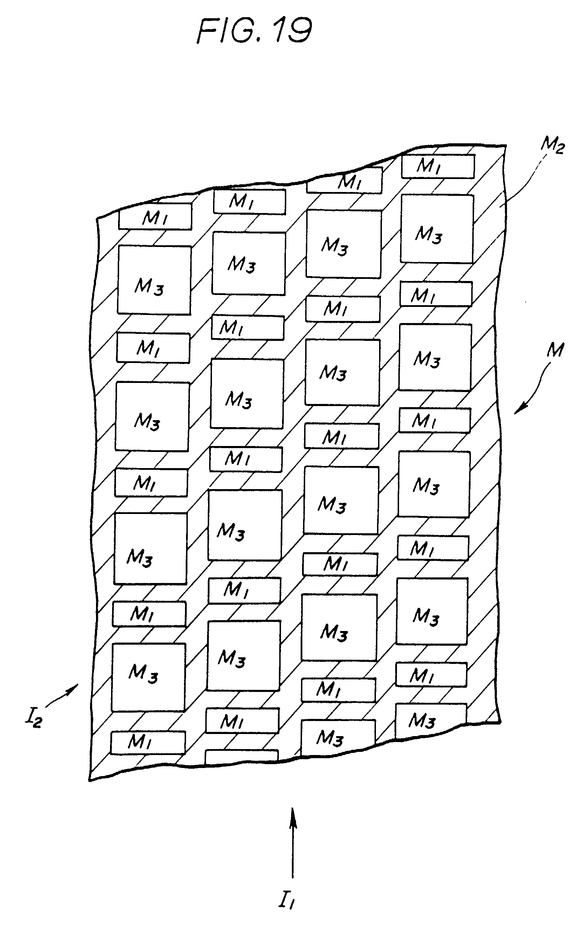

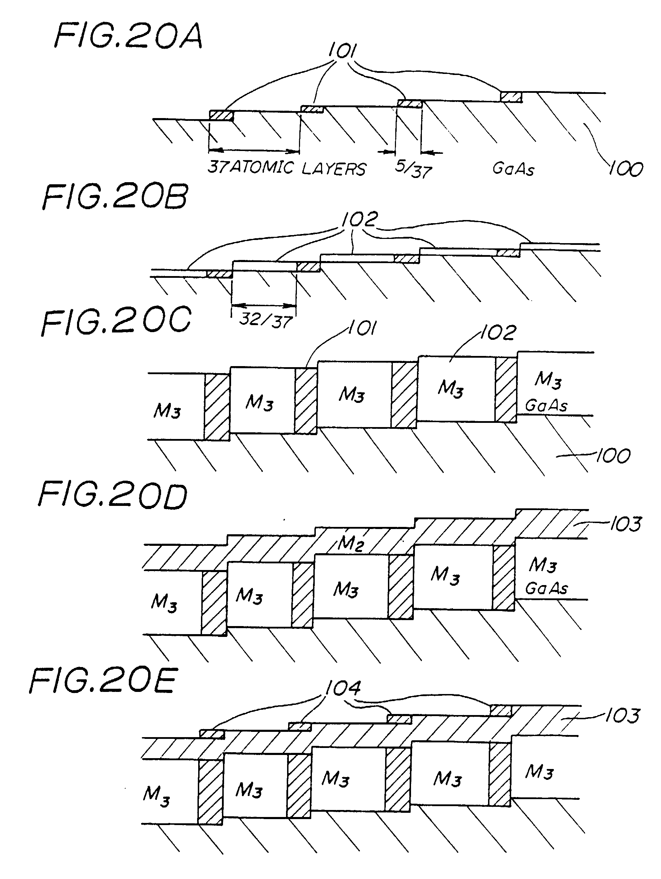

Next, a structure for realizing the state density of FIG.18 and a method of forming such a structure will be described with reference to FIG.19 and FIGS.20(A) - (H).

In the present device the state density of FIG.18 is realized by the so-called quantum well wire structure. FIG. 19 shows the fifth device of

Fig. 18 having such a quantum well wire structure. In the drawing, the material layers M1 and M3 forming the quantum well wire extend vertically to the plane of the paper and the material layer M2 fills the space between the layers M1 and M3. The material for the layers M1 and M3 may be gallium arsenide similar to the preceding embodiments and the material for the layers M2 may be aluminium gallium arsenide. In the embodiment illustrated, the thickness of the layers M1, M2 and M3 measured along the direction of propagation of the optical beam $l_1$ are set similarly to the case of the first embodiment.

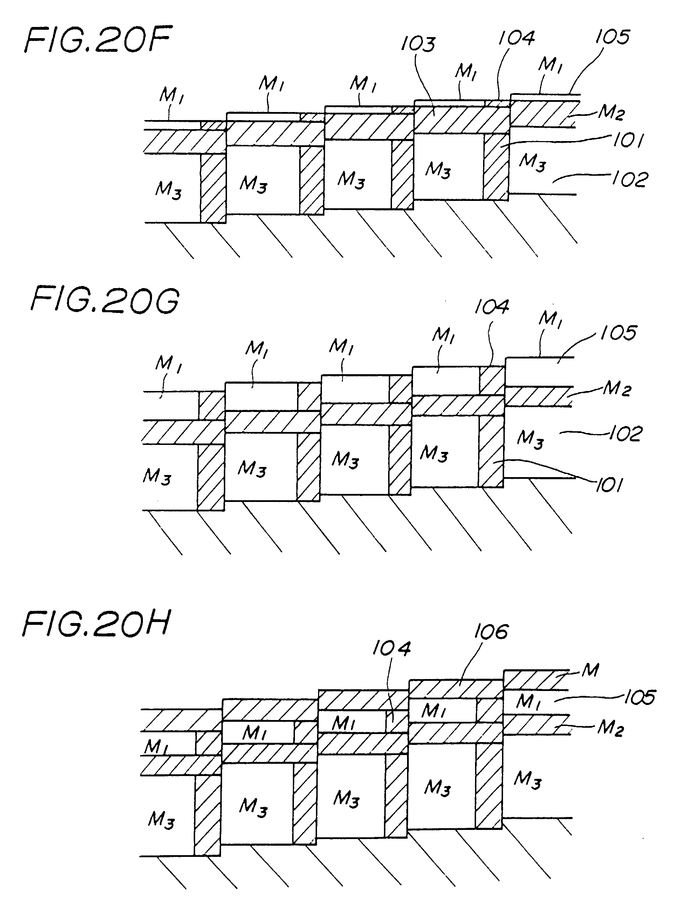

Next, the process of forming the structure of FIG.19 will be described. First, a gallium arsenide substrate 100 having a stepped surface generally extending with an angle of 1.55 degrees relative to the (100) plane is prepared such that each step extends for 37 atomic layers or 104.7 Å as illustrated in FIG.20(A). Note that the surface declines in the [011] or [011] direction and makes the 1.55 degree angle relative to the (100) plane. In the structure of FIG.20 (A), an aluminium gallium arsenide layer 101 corresponding to the material layer M2 is grown from the edge of the step for a distance of 39.6 Å or fractional distance of 5/37 as shown in FIG.20(A). Next, a gallium arsenide layer 102 corresponding to the material layer M3 is grown from the edge of the material layer 101 for a fractional distance of 32/37. As a result, a structure shown in FIG.20(B) is obtained. Further, by repeating the process of growing the layers 101 and 102 for thirty two times, a structure shown FIG.20(C) is obtained in which the material layer M2 and the material layer M3 are repeated alternately along the stepped surface. Next, an aluminium gallium arsenide layer 103 corresponding to the material layer M2 is deposited on the structure of FIG.20(C) to form a structure of FIG.20(D) wherein the top surface is defined by a stepped surface corresponding to the stepped top surface of the structure of FIG.20 (C). Next, an aluminium gallium arsenide layer 104 corresponding to the material layer M2 is further grown laterally from the edge of the step epitaxially for a fractional distance of 5/37 similarly to the layer 101 as shown in FIG.20(E) and a gallium arsenide layer 105 corresponding to the material layer M1 is grown from the step edge of the material layer 104 laterally for 32/37 fractional distance to form a structure shown in FIG.20(F). Next, the steps of FIGS.20(E) and (F) are repeated for sixteen times to form a structure shown in FIG.20(G) in which there is formed the material layer M1 with a desired thickness above the material layer M2. Further, another aluminium gallium arsenide layer 106 corresponding to the material layer M2 is deposited on the structure of FIG.20(G) and a structure shown in FIG.20(H) is obtained. In FIG.20(H), the material layer M1 extends perpendicularly to the paper with laterally and vertically surrounded by the material layer M2 whereby the so-called quantum well wire structure is obtained. The structure of FIG. 19 is obtained by repeating the steps of FIGS.20(A) - (H) for a desired number of times. The process of FIGS.20(A) - (H) can be achieved by molecular beam epitaxy or metal-organic chemical vapor deposition.

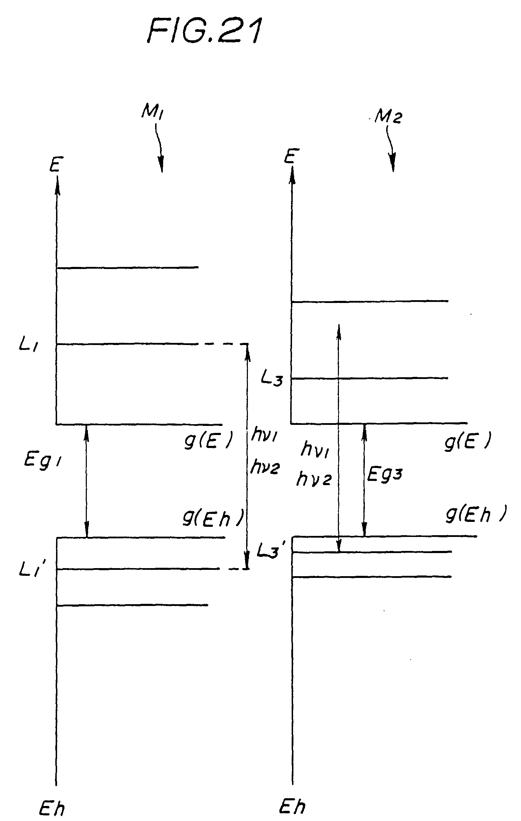

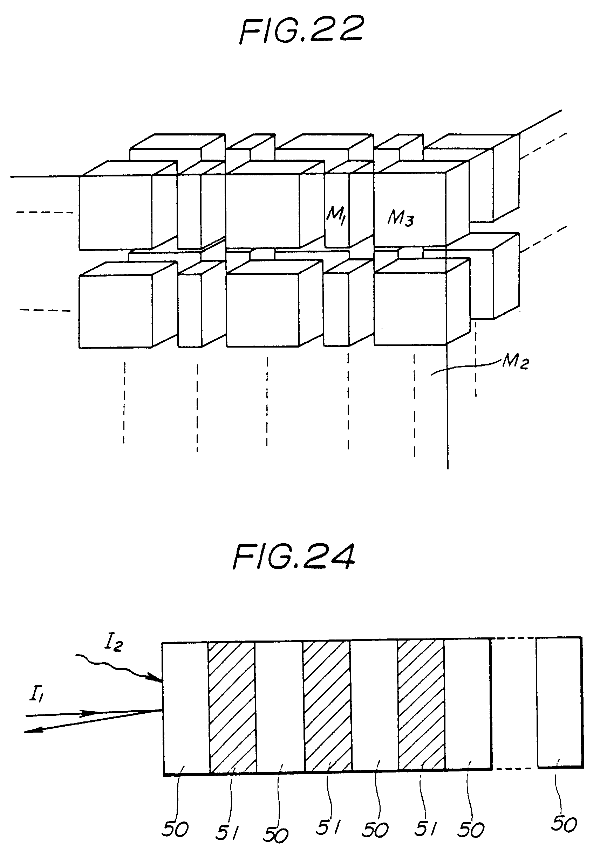

FIG.21 shows a state density of a modification of the device of Fig. 18. Such a distribution of the state density is obtained by a so called quantum well box wherein the first and third material layers M1 and M3 are three-dimensionally surrounded by the second material layer M2 as shown in FIG.22. Referring to FIG.21, it should be noted that the state density does not have a finite width in the direction of energy axis and thus there exists no corresponding excited state even when electron is excited from the valence band in the material layer M3 responsive to the irradiation of the optical beams $l_1$ and $l_2$. Thus, no transition is caused responsive to such excitation and the absorption by the material layer M3 is further decreased. Although the state to accept the electron $\underline{e}$ tunneled through the material layer M2 is not existing in such a structure, the electron $\underline{e}$ can fall into the state L3 by losing its energy by a suitable scattering process such as collision with phonon and the removal of the free electron $\underline{e}$ from the material layer M1 is performed efficiently.

Next, the process to form the structure of FIG.22 will be described briefly. As the process overlaps considerably with those described with reference to FIGS.20(A) - (H), only the essential part will be described in detail.

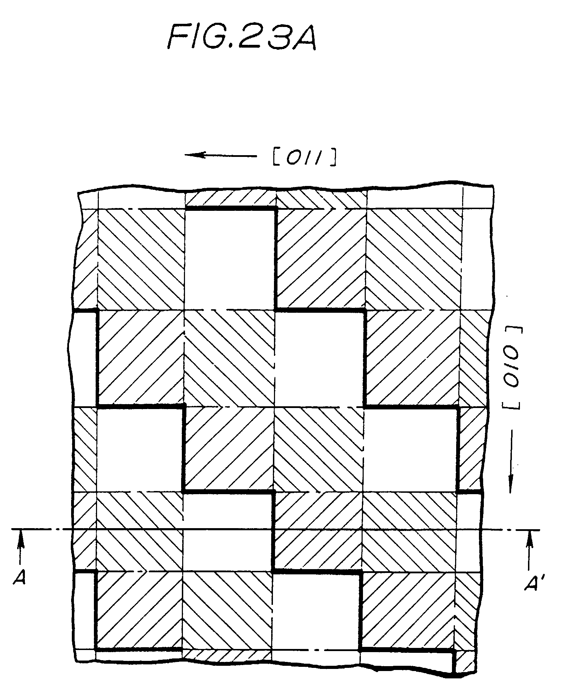

In the process of forming the structure of FIG.22, a substrate of gallium arsenide as shown in FIG.23(A) is prepared in which the substrate is defined by a stepped surface declining relative to the (100) plane of gallium arsenide with an angle of 1.55 degrees toward the [011] or [011] direction similarly to the case of FIG.20(A) and at the same time with an angle of 2.2 degrees toward the [010] direction. As a result, the substrate has a stepped surface as illustrated in FIG.23(A) in which each step is defined laterally by a pair of edges crossing perpendicularly to each other. In FIG.23(A), the stepped surface increases its height from the lower left corner to the upper right corner. When a cross section is taken along a line A-A', a same cross section as FIG.20(A) is obtained.

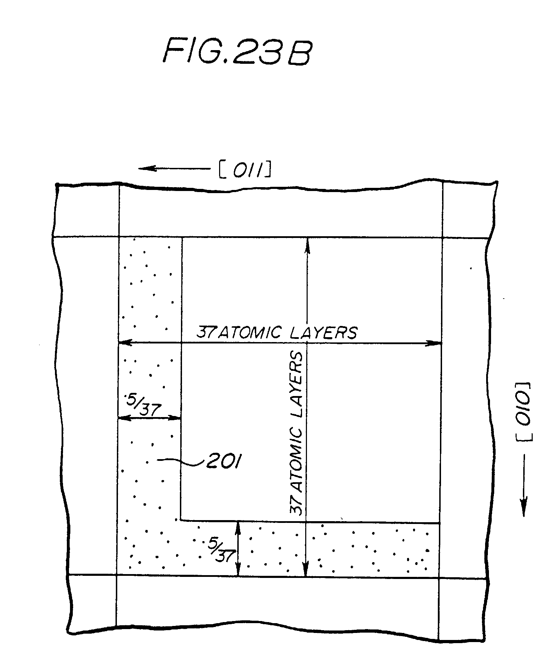

As shown in FIG.23(B), each of the steps of FIG.23(A) comprises an aluminium gallium arsenide layer 102 having a width of 5/37 fractional distances or 39.6 Å similarly to the case of the quantum well wire. Starting from this structure, a same process as in FIGS.20(A) - (H) is repeated. Note that the growth is made two-dimensionally in the case of FIGS.23(A) and (B) whereby layers corresponding to the material layers M1 and M3 are grown laterally for the 32/37 fractional distances and the layer corresponding to the material layer M2 is grown laterally for the 5/37 fractional distances both in the [011] and [010] directions. Note that the number of atoms deposited in each step is proportional to $(32/37)^2$ ($= 1024/1369$) for the material layers M1 and M3 and is proportional to $[(37)^2 - (32)^2]/(37)^2 = 345/1369$ for the material layer M2 in correspondence to the two-dimensional growth. When the process of FIGS.20(A) - (H) is applied to the structure of FIG.23(A) or (B), the material layer M1 and M3 are completely surrounded by the material layer M2 and the quantum well box shown in FIG.22 is obtained. Note that the material layer M2 is omitted from the drawing in FIG.22 for the sake of clarity. The structure thus obtained has a same cross section as that shown in FIGS. 20(A) - (H) when taken along the [011] or [011] direction which is parallel to the line A-A'.

Next, a semiconductor reflector device constructed on the basis of the non-linear optical semiconductor device of the present invention will be described with reference to FIG.24.

Referring to the drawing, the reflector device has a multi-layer structure in which a first semiconductor layer 50 having a first refractive index and a thickness equal to a quarter of the wavelength of the incident information optical beam $I_1$, and a second semiconductor layer 51 having a second refractive index and a thickness also equal to a quarter of the wavelength of the incident optical beam $I_1$ are stacked alternately. The first and second refractive indices are determined such that there is established a strong reflected beam as a result of interference of an incident optical beam and a reflected optical beam produced as a result of reflection of the incident optical beam at a boundary between the first and second semiconductor layers. Such an interference occurs when the two optical beams have an optical path difference which is a multiple of the half-wavelength of the optical beam. The thickness of each of the semiconductor layers is adjusted responsive to the speed of light passing therethrough or refractive index such that the effective thickness of each layer coincides with a quarter of the wavelength of the light.

In the reflector device of the present invention, the non-linear optical semiconductor device is used as one of the first and second semiconductor layers, for example, the layer 51. The non-linear optical semiconductor device may be the one comprising the first material layer M1 of gallium arsenide having a thickness of 35 Å so as to allow the existence of the two-dimensional excitons, a second material layer M2 of aluminium arsenide with a thickness of 17 Å and a third material layer M3 of aluminium gallium arsenide having a composition of $Al_{0.15}Ga_{0.85}As$ and a thickness of 90Å. By constructing the non-linear optical semiconductor device as such, the lowest or ground exciton level in the third material layer M3 becomes lower than the lowest exciton level in the first material layer M1 and the lowest quantum level of electron in the first material layer M1 becomes higher than the lowest quantum level of electron in the third material layer M3. Such a structure can be fabricated by using the known molecular beam epitaxy, for example. In the reflector device, the first semiconductor layer 50 is also formed by molecular beam epitaxy by depositing aluminium arsenide such that the first and second semiconductor layers are stacked alternately for twenty layers. In this construction, the first refractive index of the first semiconductor material layer 50 becomes lower than the second refractive index of the second semiconductor material layer 51.

Under an operational state, the optical beam $I_1$ alone is irradiated on the device and is reflected by the first and second semiconductor layers 50 and 51 whereby a strong reflection is established when the control optical beam $I_2$ having a wavelength which causes resonance with the excitons formed in the first material layer M1 in the second semiconductor layer 51 is irradiated on the reflector device. The formation of the excitons is disturbed and the refractive index of the second material layer 51 is changed. Responsive thereto, the interference producing the strong reflection is lost and the reflectivity of the reflector device is changed.

As the reflector device has the third material layer M3 in adjacent to the second material layer M2 which in turn surrounds the first material layer M1 from both sides in the second semiconductor layer 51, the recovery of the original operational state is achieved in a quite short period of time. By choosing the composition and thickness of the layers M1 - M3 as already described, the absorption of the optical beam $I_1$ or $I_2$ by the third material layer M3 is reduced.

It is of course possible to choose the thickness of the layers 50 and 51 such that the reflection appears only when the first and second optical beams $I_1$ and $I_2$ are irradiated simultaneously.

It should be noted that the material and the layer thickness of the layers M1, M2 and M3 are by no means limited as described but the following combination of materials is also possible for realizing the semiconductor optical device of the present invention.

| M1 | GaAs | GaAs | InGaAs | InGaAs | InGaAs |
| M2 | AlGaAs | $Al_{x1}Ga_{1-x1}As$ | InAlAs | InAlAsSb | InP |
| M3 | GaAs | $Al_{x2}Ga_{1-x2}As$ | InGaAs | InGaAs | InGaAsP |

The thickness $I_1$ of the first material layer M1 is determined so as to allow the existence of the two-dimensional excitons and is generally set below about 300 Å. The thickness $I_2$ of the second material layer M2 for allowing tunneling of the electron therethrough is generally set equal to or below about 100 Å. The thickness $I_3$ of the third material layer M3, on the other hand, is allowed to have a relatively wide range for receiving the electron formed in the first layer M1 and is generally set equal to or below about 1000 Å.

Further, the present invention is not limited to these embodiments but various variations and modifications may be made without departing from the scope of the invention.

**Claims**

1. A semiconductor optical device having a refractive index changed in response to irradiation of an incident optical beam, comprising:

a first material layer (M1) having a first band gap (Eg1) and a first thickness ($l_1$);

a second material layer (M2) having a second band gap (Eg2) substantially larger than said first band gap and disposed at both sides of said first material layer, said second material layer having a second thickness ($l_2$) for allowing tunneling of electrons therethrough; and

a third material layer (M3) having a third band gap (Eg3) substantially smaller than said second band gap and provided at least on one side of said second material layer, said third material layer (M3) having a third thickness ($l_3$);

said first thickness ($l_1$) being chosen such that there is formed a quantum well structure in said first material layer (M1) wherein electrons and holes assume discrete quantum levels (L1, L1') respectively at a conduction band and a valence band in said first material layer,

said third thickness ($l_3$) being chosen such that there is formed a quantum well structure in said third material layer (M3) wherein electrons and holes assume other discrete quantum levels (L3, L3') respectively at the conduction band and the valence band in said third material layer and such that there exists at least one quantum level of electrons (L3) in said third material layer (M3) of which energy is substantially lower than that of the quantum level (L1) of electrons interacting with said incident optical beam in said first material layer (M1),

**characterized in that**

said first and second material layers have respective thicknesses and compositions chosen such that there exists an energy difference ($E_H$) between the quantum level of the holes (L1') in said first material layer (M1) and a top edge of the valence band ($E_V$) of said second material layer (M2) which is substantially reduced as compared to that ($E_E$) between a bottom edge of the conduction band ($E_C$) of said second material layer (M2) and said quantum level (L1) of the electrons interacting with said incident optical beam in said first material layer (M1), so that tunneling of electrons from said first material layer to said third material layer through said second material layer is facilitated.

2. A semiconductor optical device according to claim 1,
**characterized in that**

said energy difference ($E_H$) between the quantum level of the holes (L1') and the top edge of the valence band ($E_V$) is set equal to or smaller than about one-fifth of the energy difference ($E_E$) between the quantum level of the electrons (L1) and the bottom edge of the conduction band ($E_C$).

**Patentansprüche**

1. Optische Halbleiteranordnung mit einem Brechungsindex, der durch die Bestrahlung mit einem einfallenden optischen Strahl verändert wird, umfassend:

eine erste Materialschicht (M1) mit einem ersten Bandabstand (Eg1) und einer ersten Dicke ($l_1$),

eine zweite Materialschicht (M2) mit einem zweiten Bandabstand (Eg2), der deutlich größer als der erste Bandabstand ist, wobei die zweite Materialschicht an beiden Seiten der ersten Materialschicht angeordnet ist und eine zweite Dicke ($l_2$) aufweist, um ein Durchtunneln von Elektronen zu ermöglichen, und

eine dritte Materialschicht (M3) mit einem dritten Bandabstand (Eg3), der deutlich kleiner als der zweite Bandabstand ist, wobei die dritte Materialschicht (M3) an mindestens einer Seite der zweiten Materialschicht vorgesehen ist und eine dritte Dicke ($l_3$) aufweist,

wobei die erste Dicke ($l_1$) derart gewählt ist, daß in der ersten Materialschicht (Ml) eine Quantentopfstruktur ausgebildet ist, wobei Elektronen und Löcher in einem Leitungsband bzw. einem Valenzband der ersten Materialschicht diskrete Quantenniveaus (L1, L1') annehmen,

wobei die dritte Dicke ($l_3$) derart gewählt ist, daß in der dritten Materialschicht (L3) eine Quantentopfstruktur ausgebildet ist, wobei Elektronen und Löcher in dem Leitungsband bzw. dem Valenzband der dritten Materialschicht diskrete Quantenniveaus (L3, L3') annehmen, und daß in der dritten Materialschicht (M3) mindestens ein Elektronenquantenniveau (L3) vorhanden ist, dessen Energie deutlich kleiner als die Energie des in Wechselwirkung mit dem einfallenden optischen Strahl stehenden Elektronenquantenniveaus (L1) in der ersten Materialschicht (M1) ist,

**dadurch gekennzeichnet**,

daß die ersten und zweiten Materialschichten entsprechende Dicken und Zusammensetzungen haben, die derart gewählt sind, daß zwischen dem Löcherquantenniveau (L1') in der ersten Materialschicht (M1) und einer Oberkante des Valenzbands ($E_v$) der zweiten Materialschicht (M2) ein Energieunterschied ($E_H$) besteht, der im Vergleich zu dem Energieunterschied ($E_E$) zwischen einer Unterkante des Leitungsbands ($E_c$) der zweiten Materialschicht (M2) und dem in Wechselwirkung mit dem einfallenden optischen Strahl stehenden Elektronenquantenniveau (L1) in der ersten Materialschicht (M1) deutlich verringert ist, so daß das Tunneln von Elektronen ausgehend von der ersten Materialschicht durch die zweite Materialschicht in die dritte Materialschicht erleichtert wird.

2. Optische Halbleiteranordnung nach Anspruch 1,
**dadurch gekennzeichnet**,

daß der Energieunterschied ($E_H$) zwischen dem Löcherquantenniveau (L1') und der Oberkante des Valenzbands (Ev) gleich groß oder kleiner ist als ungefähr ein Fünftel des Energieunterschieds ($E_E$) zwischen dem Elektronenquantenniveau (L1) und der Unterkante des Leitungsbands ($E_c$).

**Revendications**

1. Dispositif optique à semiconducteur présentant un indice de réfraction qui varie en fonction de l'arrivée, sur celui-ci, d'un faisceau optique incident, comprenant :

une première couche de matière (Ml) ayant une première bande interdite (Eg1) et une première épaisseur ($l_1$);
une deuxième couche de matière (M2) ayant une deuxième bande interdite (Eg2), qui est sensiblement plus grande que ladite première bande interdite, et disposée de part et d'autre de ladite première couche de matière, ladite deuxième couche de matière ayant une deuxième épaisseur ($l_2$) telle qu'elle permet que des électrons la traversent par effet tunnel ; et
une troisième couche de matière (M3) ayant une troisième bande interdite (Eg3), qui est sensiblement plus petite que ladite deuxième bande interdite, et disposée au moins sur un côté de ladite deuxième couche de matière, ladite troisième couche de matière (M3) ayant une troisième épaisseur ($l_3$) ;
ladite première épaisseur ($l_1$) étant choisie de façon qu'il se forme une structure de puits quantique dans ladite première couche de matière (M1), où des électrons et des trous prennent des niveaux quantiques discrets (L1, L1') respectivement sur la bande de conduction et la bande de valence dans ladite première couche de matière, ladite troisième épaisseur ($l_3$) étant choisie de façon qu'il se forme une structure de puits quantique dans ladite troisième couche de matière (M3), où des électrons et des trous prennent d'autres niveaux quantiques discrets (L3, L3') respectivement sur la bande de conduction et la bande de valence dans ladite troisième couche de matière, et de façon qu'il existe au moins un niveau quantique d'électrons (L3) dans ladite troisième couche de matière (M3) dont l'énergie soit sensiblement inférieure à celle du niveau quantique (L1) d'électrons interagissant avec ledit faisceau optique incident dans ladite première couche de matière (M1),

caractérisé en ce que :

lesdites première et deuxième couches de matières ont des épaisseurs et des compositions respectives choisies de manière qu'il existe une différence d'énergie ($E_H$) entre le niveau quantique des trous (L1') dans ladite première couche de matière (M1) et le bord supérieur de la bande de valence ($E_v$) de ladite deuxième couche de matière (M2), qui soit sensiblement réduite par comparaison avec la différence ($E_E$) existant entre le bord inférieur de la bande de conduction ($E_c$) de ladite deuxième couche de matière (M2) et ledit niveau quantique (L1) des électrons interagissant avec ledit faisceau optique incident dans ladite première couche de matière (M1), de façon que le passage par effet tunnel des électrons, de ladite première couche de matière à ladite troisième couche de matière, via ladite deuxième couche de matière, soit facilité.

2. Dispositif optique à semiconducteur selon la revendication 1,

caractérisé en ce que :

ladite différence d'énergie ($E_H$) existant entre le niveau quantique des trous (L1') et le bord supérieur de la bande de valence ($E_v$) est fixée à une valeur égale ou inférieure à environ un cinquième de la différence d'énergie ($E_E$) existant entre le niveau quantique des électrons ($L_1$) et le bord inférieur de la bande de conduction ($E_c$).

## FIG.1 (PRIOR ART)

## FIG.2 (PRIOR ART)

15

## FIG.3 (PRIOR ART)

## FIG.4 (PRIOR ART)

# FIG.5 (PRIOR ART)

# FIG.6 (PRIOR ART)

## FIG.7

## FIG.14

# FIG.8

## FIG.9

# FIG.10

ABSORPTION
(STATE DENSITY)

ABSORPTION
(STATE DENSITY)

## FIG.11

# FIG.12

FIG.13A

FIG.13B

## FIG. 15

$M_3$ $M_2$ $M_1$ $M_2$ $M_3$ $M_2$ $M_1$ $M_2$ $M_3$ $M_2$ $M_1$ $M_2$ $M_3$

$L_1$   $L_3$

$e$   $e$

$E_C$

$Eg_1$   $\Delta E_1 < \Delta E_3$   $Eg_3'$

$E_1 > E_3$

$E_F$

$E_V$

$L_1'$   $L_3'$

## FIG.16

$M_3 \, M_2 \, M_1 \, M_2 M_3 \, M_2 \, M_1 M_2 \, M_3 \, M_2 \, M_1 \, M_2 \, M_3$

$E_{g1}$  $\Delta E_1 < \Delta E_3$  $E_{g3}$

$E_1 > E_3$

$E_c$

$E_F$

$E_V$

# FIG.17A

# FIG.17C

# FIG.17B

# FIG.18

## FIG. 19

FIG.20A

101

37 ATOMIC LAYERS    5/37    GaAs    100

FIG.20B

102

32/37

FIG.20C

101    102

$M_3$    $M_3$    $M_3$    $M_3$    $M_3$
GaAs    100

FIG.20D

103

$M_2$

$M_3$    $M_3$    $M_3$    $M_3$    $M_3$
GaAs

FIG.20E

104    103

$M_3$    $M_3$    $M_3$    $M_3$    $M_3$

## FIG.20F

## FIG.20G

## FIG.20H

FIG.21

## FIG.22

## FIG.24

# FIG.23A

# FIG.23B